# EUROPÄISCHE PATENTSCHRIFT

(11) **EP 4 496 291 B1**
(45) Veröffentlichungstag und Bekanntmachung des Hinweises auf die Patenterteilung: **22.10.2025**
(21) Anmeldenummer: 23185841.6
(22) Anmeldetag: 17.07.2023
(51) Int. Cl.: H04L 67/02, H04L 69/14, H04L 67/563, H04L 67/567

(54) **KOMMUNIKATIONSSYSTEM UND INDUSTRIELLES AUTOMATISIERUNGSGERÄT ZUM VERARBEITEN EINER WEB-ANFRAGE VON EINEM CLIENT**
COMMUNICATION SYSTEM AND INDUSTRIAL AUTOMATION DEVICE FOR PROCESSING A WEB REQUEST FROM A CLIENT
SYSTÈME DE COMMUNICATION ET APPAREIL D'AUTOMATISATION INDUSTRIELLE POUR TRAITER UNE REQUÊTE WEB D'UN CLIENT

(43) Veröffentlichungstag der Anmeldung: 22.01.2025
(73) Patentinhaber: Siemens Aktiengesellschaft, 80333 München (DE)
(72) Erfinder: Gerlach, Hendrik, 91058 Erlangen (DE); Reichmann, Jürgen, 81825 München (DE)
(74) Vertreter: Siemens Patent Attorneys

(56) Entgegenhaltungen:
- US-A1- 2015 229 628
- US-A1- 2016 234 330

## Beschreibung

Die Erfindung betrifft ein Kommunikationssystem und ein industrielles Automatisierungsgerät zum Verarbeiten einer Web-Anfrage von einem Client wie in den unabhängigen Ansprüchen beschrieben. Weitere Ausführungsformen sind in den abhängigen Ansprüchen beschrieben.

Heutzutage wird versucht, den Gedanken offener Applikationssysteme ("Apps") in die Automatisierungswelt zu transformieren. Ein Aspekt auf dem Weg zur Transformation in die Industrie 4.0-Welt sind Weblösungen, welche z.B. für Inbetriebnahme, Parametrierung und Diagnose genutzt werden und welche auch Oberflächen für das Bedienen/Beobachten bereitstellen. Bei Verwendung der Webtechnologie tritt in offenen Systemen schnell eine Herausforderung auf, sobald mehrere Subsysteme eines Gerätes eigene Webserver bzw. Weblösungen mitbringen. Diese unabhängigen Webserver müssen integriert werden, sodass sie dem Endnutzer nur einen Webzugangspunkt pro Gerät bieten, so wie man das sowohl von bisherigen Automatisierungsgeräten als auch aus einem spezifischen Netzwerk wie dem Internet gewöhnt ist.

Existierende Integrationslösungen für Web, die sog. Reverse Proxys (Proxy-Einheit), schaffen es einen einzigen Zugangspunkt zum Gerät anzubieten (z.B. auf den bekannten Web-Ports 80 oder 443), bieten aber keine Unterstützung zur Integration auf der Content-Seite (also den Webseiten selbst). So folgt jeder Subsystementwickler eigenen Vorstellungen hinsichtlich der Content-Darstellung im Web-Umfeld. Dies lässt solche Automatisierungslösungen nach außen als fragmentiert und weniger als einheitliche Gesamtlösung aus "einem Guss" erscheinen.

Ein sinnvoller Weg von einer Integration diverser unabhängiger Weblösungen hin zu einer Lösung mit Unterstützung zur Content-Harmonisierung ist ein sog. Portalwebserver. Der Portalwebserver ist per se der einheitliche Zugangspunkt zum Gerät für den Nutzer. Systemkonforme Weblösungen einzelner Komponenten können sich in den Portalwebserver integrieren und so helfen, eine einheitliche Lösung für Endkunden zu schaffen. Webseiten von Subkomponenten sehen bei konformer Integration so aus, wie auch "System-Webseiten" zum Management des Systems und der Plattform. Der Endkunde bekommt somit den Eindruck eines einheitlichen Systems.

Die Veröffentlichung US 2016/0234330 A1 - "SYSTEM AND METHOD FOR MOBILE APPLICATION DEEP LINKING" schlägt vor, beim Deep-Linking den Inhalt der bereitgestellten Webseiten hinsichtlich der eingebetteten Adressen zu modifizieren.

Die Druckschrift US 2015/0229628 A1 - Kosim-Satyaputra et al. "SYSTEM, METHOD AND ARCHITECTURE FOR PROVIDING INTEGRATED APPLICATIONS" zeigt eine Multi-Tenant-Anordnung, bei der für den Zugriff entfernter Applikationen ein Autorisierungsserver eingesetzt wird.

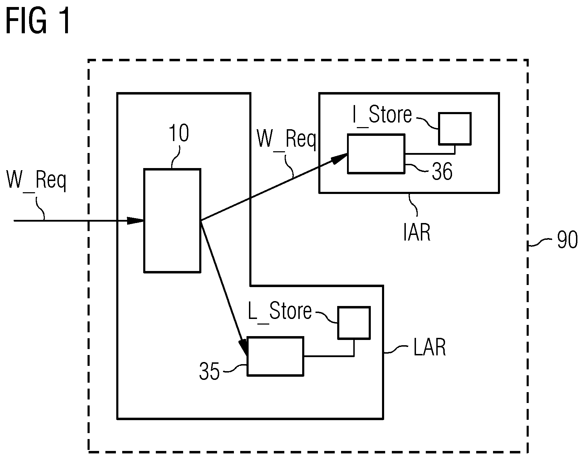

Fig. 1 zeigt eine Web-Plattform aus dem Stand der Technik, welche folgende Architekturmerkmale aufweist:
Eine Industrial Appstore Runtime "IAR" ermöglicht es, Apps aus einem zentralen (offiziellen) Industrie-Appstore zum Laufen zu bringen. Diese Runtime stellt für den Betreiber des Appstores sicher, dass nur Apps ausgeführt werden können, für die entsprechende Rechte erworben wurden.

Eine Local App Runtime "LAR" ermöglicht es dem Anwender zusätzlich Apps mit anderen Eigenschaften zu betreiben. Solche Apps sind z.B. Apps des Anwenders, die er nicht in dem zentralen industriellen Appstore einbringen möchte.

Während die IAR im Stand der Technik ein zentrales Management Pattern umsetzt (d.h. Apps werden von einem zentralen Geräte-Management auf die Geräte (bzw. deren IAR) gepusht), kann eine LAR in Verbindung mit einer ersten Plattform ein dezentrales App-Management ermöglichen. D.h. Apps werden auf dem Gerät selbst aus einem App-Store gepullt, so wie das heute für Kundengeräte wie Smartphones üblich ist. In beiden Fällen erfolgt das Management in den Runtimes in der Regel über Webserver und/oder über Web-APIs von Webservices. Bereits in einer solchen einfachen Konfiguration treffen bereits zwei unabhängige Management-Webserver aufeinander:
- eine erste Webserver-Einheit (erster Management-Webserver) für die LAR und
- eine zweite Webserver-Einheit (zweiter Management-Webserver) für die IAR.

Gemäß dem Stand der Technik sind diese beiden Management-Webserver über eine vorgeschaltete Proxy-Einheit zu integrieren.

In der Proxy-Einheit erhält jeder dahinter liegende Sub-Webserver eine Sub-URL (URL-Präfix) zugeordnet, unter dem dieser Webserver von außen über die Proxy-Einheit erreichbar ist. Zentraler Eingangspunkt in das Webserver-"Applikationscluster" ist im Stand der Technik also immer die Proxy-Einheit. Diese übernimmt die Verteilung der eintreffenden Anfragen auf die Sub-Webserver. Dieses "Splitting" erfolgt anhand der URL-Prefixe, die den nachgelagerten Webservern dediziert zugeordnet sind.

Die Proxy-Einheit besitzt dazu eine Konfigurationsdatei, in der (u.a.) die vorgesehenen URLs für die nachgelagerten Webserver sowie deren IP-Adressen definiert werden. An diesem Konfigurationspunkt treffen sich unkoordiniert Management-Anforderungen aus der IAR wie auch Management-Anforderungen aus der LAR.

Zusammenfassend ergeben sich durch die Proxy-Einheit aus dem Stand der Technik neben den sichtbaren Problematiken im Bereich Benutzeroberfläche und Bedienphilosophie gegenüber einem Portalwebserver-Ansatz eine Reihe von Problematiken:
Die erste Webserver-Einheit in der ersten Management-Domain wird zur Konfiguration des Systems und damit in aller Regel auch zur Konfiguration des zum System gehörenden Reverse Proxys verwendet. Im Falle einer automatischen oder manuellen Fehlkonfiguration des Reverse Proxys ist die erste Webserver-Einheit des Gerätes nicht mehr erreichbar. Damit ist auch diese Fehlkonfiguration unter Nutzung dieser ersten Webserver-Einheit nicht korrigierbar.

Der Reverse Proxy muss voll gemanagt werden, d.h. bei jeder neuen Wurzel-Webseite im Portalwebserver und auch in der App-Store Runtime muss die Konfiguration im Reverse Proxy nachgeführt werden. Jegliche manuelle Konfiguration von Kommunikationswegen ist eine potenzielle Fehlerquelle und Schwachstelle.

Viele existierende Web-Anwendungen sind nicht für Reverse Proxys ausgelegt. Solche Webapplikationen auf verschiedenen Webservern können nicht auf einfache Art prüfen, ob sie hinter einem Reverse Proxy betrieben werden oder nicht. Beispielsweise können sich Cookies einer Webapplikation im Browser gegenseitig überschreiben. Beispiel: Wird ein Webserver einer speicherprogrammierbaren Steuerung hinter einem Reverse Proxy betrieben, führt dies u.a. zum gegenseitigen Überschreiben von Login-Cookies. Somit muss sich ein Anwender jedes Mal wieder neu einloggen, wenn dieser den Webserver gewechselt hat.

Die IP-Adresse des Clients ist im IP-Paket, das die erste Webserver-Einheit, die hinter dem Reverse Proxy liegt, erreicht, nicht mehr sichtbar (er erkennt immer die IP-Adresse des Reverse Proxys als Quelladresse) - das reduziert insbesondere den Wert der Protokollierung in der ersten Webserver-Einheit erheblich. Eine solche eingeschränkte Sichtbarkeit der Client-Anfragen, die den Reverse Proxy passieren, erschwert die Fehlersuche und beeinträchtigt die Sicherheit des Systems.

Durch die systembedingte Terminierung von TLS-Tunneln am Reverse Proxy entsteht eine Security-Degradation. Ein Reverse Proxy arbeitet per Konzept als Man-in-the-Middle-"Angreifer", weil er als ISO-Layer-7 Gateway sichere Tunnel zum Destination-Webserver (z.B. die erste Webserver-Einheit) unterbricht. Eine Kompromittierung des Reverse Proxys erlaubt damit Angreifern Zugriff auf den unverschlüsselten Datenverkehr. Neben diesem Aufbrechen der Ende-zu-Ende-Security bestehen weitere Problematiken hinsichtlich des Zertifikatshandlings zwischen Reverse Proxy und Destination-Webserver. Der Reverse Proxy muss allen Webservern, die sich hinter ihm befinden, vertrauen (d.h. ihren (verschiedenen) Zertifikaten), damit er nach der Unterbrechung der Tunnel auf der Eingangsseite wenigstens wieder sichere Tunnel auf der anderen Seite (zu den Endpunkt-Webservern) aufbauen kann. Wegen des Handlings-Aufwandes werden die Verbindungen zwischen Reverse Proxy und den Destination-Webservern meist sogar ungesichert betrieben. Damit sind diese Verbindungen direkt angreifbar, was je nach Security Policy ein Problem darstellen kann.

Vor diesem Hintergrund besteht eine Aufgabe der vorliegenden Erfindung darin, die Verwaltung von Webservices, die über einen Webserver erreichbar sind, zu verbessern.

Gemäß einem ersten Aspekt wird ein Kommunikationssystem, insbesondere Automatisierungssystem, zum Verarbeiten einer Web-Anfrage von einem Client zum Abrufen eines Webservices in einem spezifischen Netzwerk vorgeschlagen. Das Kommunikationssystem weist auf:
einen Webserver zum Empfangen der Web-Anfrage von dem Client und zum Übertragen einer auf Basis der Web-Anfrage transformierten Web-Antwort zurück an den Client,
eine zu dem Webserver getrennt angeordnete und zu dem Webserver in dem Kommunikationssystem nachgelagert angeordnete Proxy-Einheit, welche mit dem Webservice gekoppelt ist,
wobei der Webserver einen Proxy-Adapter aufweist, welcher dazu eingerichtet ist, den Webserver an die zu dem Webserver getrennt und nachgelagert angeordnete Proxy-Einheit zu koppeln,
wobei der Proxy-Adapter ferner dazu eingerichtet ist, die Web-Anfrage in Abhängigkeit der zu dem Webserver getrennt und nachgelagert angeordneten Proxy-Einheit sowie dem Webservice in die Web-Antwort zu transformieren.

Gemäß dem Kommunikationssystem gemäß dem ersten Aspekt wird die Verwaltung von Webservices, die über einen Webserver erreichbar sind, dadurch verbessert, dass der Webserver nicht mehr hinter der Proxy-Einheit angeordnet ist, sondern vor der Proxy-Einheit angeordnet ist. Mit anderen Worten ist die Proxy-Einheit zu dem Webserver nachgelagert angeordnet. Dies bedeutet, dass der Webserver durch diese spezielle Anordnung nun von einem Backend-Server zu einem Frontend-Server wird und dadurch die primäre Rolle, die im Stand der Technik der Proxy-Einheit zugeteilt war, übernimmt. Somit empfängt der Webserver alle Web-Anfragen an ein Gerät des Kommunikationssystems als ein zentraler Webserver, wodurch dieser zu einem Portalwebserver wird.

Um weiterhin den Zugang zu den Weblösungen der Applikationen, die auf der weiteren lokalen dezentralen Applikations-Laufzeitumgebung (IAR) laufen, zu ermöglichen, ist die Proxy-Einheit geeignet an den (Portal-)Webserver über den Proxy-Adapter angebunden. Die Proxy-Einheit befindet sich nun hinter dem Webserver und wird nun eindeutig und ausschließlich der IAR zugeordnet.

Dies hat den technischen Effekt, dass die Proxy-Einheit nun nicht mehr für den Webzugang zu der ersten Management-Domain verwendet und auch nicht mehr von der ersten Management-Domain aus verwaltet wird.

Dies hat den Vorteil, dass sich eine logische Trennung zwischen der ersten Management-Domain und der zweiten Management-Domain ergibt. Die erste Management-Domain weist den Portalwebserver und den Proxy-Adapter auf. Die zweite Management-Domain beginnt bei der Proxy-Einheit. Die Konflikte eines Managements der Proxy-Einheit von mehreren Seiten sind damit behoben.

Automatische oder manuelle Fehlkonfigurationen, selbst wenn sie nach Auflösung des oben erwähnten Managementkonfliktes noch vorkommen sollten, betreffen nun nur noch die zweite Management-Domain. Ein nicht mehr funktionsfähiger Webzugang seitens der zweiten Management-Domain kann vorteilhafterweise von der ersten Management-Domain wieder in einen funktionsfähigen Ausgangszustand zurückgesetzt werden. Auch ist nun im Falle einer automatischen oder manuellen Fehlkonfiguration der Proxy-Einheit zumindest immer noch die erste Management-Domain und der Webserver erreichbar und nur noch eventuell Apps in der zweiten Management-Domain nicht mehr erreichbar. Damit kann die erste Management-Domain und der Webserver unabhängig von der Proxy-Einheit betrieben werden.

Weiter vorteilhaft ist durch die vorgelagerte Anordnung des Webservers, dass nun wieder die IP-Adresse des Clients im IP-Paket, welches den Webserver erreicht, sichtbar ist. Dies erleichtert die Fehlersuche und erhöht die Sicherheit des Kommunikationssystems.

Da die Proxy-Einheit nun nachgelagert zu dem Webserver angeordnet ist, entfällt eine systembedingte Terminierung von TLS-Tunneln an der Proxy-Einheit, was ebenso die Sicherheit des Kommunikationssystems erhöht.

Zudem erhöht sich die Performance und die Latenz (Transaktionslatenz) des Kommunikationssystems, da die nachgeschaltete Proxy-Einheit nicht mehr als ein Layer-7 Umsetzer fungieren muss und keine TCP- und TLS-Verbindungen auf der einen Seite terminieren muss und auf der anderen Seite wieder neu aufbauen muss.

Das Kommunikationssystem kann insbesondere innerhalb einer Automatisierungsanlage oder als eine Automatisierungsanlage implementiert werden. Die Automatisierungsanlage kann eine Anlage aus der Prozessindustrie, der chemischen Industrie, der pharmazeutischen Industrie, der petrochemischen Industrie oder eine Anlage aus der Lebensmittel- und Getränkeindustrie sein. Dazu gehören auch beliebige Anlagen aus der Fertigungs- und Produktionsindustrie und Anlagen, in denen z.B. Autos oder Güter jeglicher Art produziert werden. Darüber hinaus kann die Automatisierungsanlage auch als Energieerzeugungsanlage, wie z.B. eine Windkraftanlage, eine Solaranlage oder ein Kraftwerk und/oder als Energieverteilungsanlage ausgeführt sein.

Eine Web-Anfrage (engl. Web-Request) ist eine Anfrage, die von einem Client, wie beispielsweise einem Webbrowser, an den Webserver gestellt wird, um den Webservice abzurufen. Web-Anfragen werden insbesondere über das Hypertext Transfer Protocol (HTTP) gesendet, weshalb die Web-Anfrage auch als eine HTTP-Anfrage bezeichnet werden kann.

Eine Web-Antwort (engl. Web-Response) geht als Reaktion auf die übertragene Web-Anfrage vom Webserver, welcher die übertragene Web-Anfrage verarbeitet und die Web-Antwort umwandelt, wieder zurück zum Client. Die Web-Antwort ist insbesondere eine HTTP-Antwort.

Ein Client - auch clientseitige Anwendung, Clientanwendung oder Clientprogramm - bezeichnet ein Computerprogramm, das auf einem Endgerät eines Netzwerks ausgeführt wird und mit einem Server oder Webserver kommuniziert. Vorzugsweise ist das Endgerät selbst, welches Dienste von einem Server abruft, ein Client.

Ein Webservice ist jeder Service, der sich in einem spezifischen Netzwerk, wie beispielsweise einem lokalen Netzwerk oder dem Internet befindet oder mit diesem verbunden ist, wie beispielsweise eine Webseite, eine Web-Applikation, eine Applikation oder ein Service, insbesondere ein Mikroservice. Webservices werden mit Hilfe von Uniform Resource Identifiers (URIs) identifiziert.

Ein spezifisches Netzwerk ist insbesondere ein lokales Netzwerk oder das Internet. Das lokale Netzwerk kann als ein Enterprise-Netzwerk oder als ein geschlossenes Computernetzwerk ausgebildet sein.

Ein Webserver ist insbesondere ein Server, der Dokumente an Clients, wie beispielsweise einen Webbrowser überträgt. Als Webserver bezeichnet man den Computer mit Webserver-Software oder nur die Webserver-Software selbst. Vorzugsweise ist der Webserver als ein Portalwebserver ausgebildet. Ein Portalwebserver ist ein zentraler Server, welcher alle Web-Anfragen an ein Gerät des Kommunikationssystems empfängt und anschließend selektiert und an die richtige Stelle weiterleitet.

Der Begriff "nachgelagert angeordnet" bedeutet insbesondere, dass der Webserver vor der Proxy-Einheit angeordnet ist und diese nach dem Webserver angeordnet ist. Mit anderen Worten erhält nicht die Proxy-Einheit zuerst die Web-Anfrage, sondern der Webserver, welcher die Web-Anfrage dann an die Proxy-Einheit über den Proxy-Adapter weiterleiten kann.

Vorzugsweise bedeutet der Begriff "getrennt angeordnet", dass der Webserver und die Proxy-Einheit logisch voneinander getrennt angeordnet sind. Eine "logische Trennung" bedeutet insbesondere, dass der Webserver eine erste zugewiesene logische Adresse, beispielsweise eine TCP-IP-Adresse, in dem Kommunikationssystem aufweist, wohingegen die Proxy-Einheit eine zweite zugewiesene logische Adresse in dem Kommunikationssystem aufweist.

Eine Proxy-Einheit ist eine Kommunikationsschnittstelle in dem Kommunikationssystem. Die Proxy-Einheit operiert insbesondere als ein Vermittler, der auf der einen Seite Web-Anfragen entgegennimmt, um dann über seine eigene Adresse eine Verbindung zu einer anderen Seite herzustellen. Die Proxy-Einheit ist insbesondere als ein Reverse Proxy ausgebildet.

Insbesondere nimmt der Proxy-Adapter die Web-Anfrage entgegen. Der Proxy-Adapter dient dazu, die nachgeschaltete Proxy-Einheit anzubinden bzw. zu koppeln. Vorzugsweise wird eine in den vorausgehenden Komponenten, also der URL-Handlerkette, nicht bearbeitete Web-Anfrage von dem Proxy-Adapter an die Proxy-Einheit einer zweiten Management-Domain weitergeleitet.

Die jeweilige Einheit, zum Beispiel die Proxy-Einheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Gemäß einer Ausführungsform sind der Webserver in einer ersten Management-Domain und die von dem Webserver getrennt und nachgelagert angeordnete Proxy-Einheit in einer zweiten Management-Domain angeordnet, wobei die erste Management-Domain und die zweite Management-Domain logisch voneinander getrennt sind.

Die obige Erläuterung des Begriffs "logische Trennung" gilt analog auch für diese Ausführungsform.

Insbesondere können in dem Kommunikationssystem gemäß dem ersten Aspekt die erste Management-Domain und die zweite Management-Domain räumlich getrennt voneinander an unterschiedlichen Orten und/oder Geräten angeordnet sein.

Erfindungsgemäß sind die erste Management-Domain als eine lokale dezentrale Applikations-Laufzeitumgebung, welche einen lokalen oder remoten APP-Store mit zumindest einer lokalen Applikation aufweist, und die zweite Management-Domain als eine weitere lokale dezentrale Applikations-Laufzeitumgebung, welche einen zentralen APP-Store mit zumindest einer zentral abgelegten Applikation aufweist, ausgebildet.

Die erste Management-Domain ist insbesondere eine "Local App Runtime" oder auch kurz "LAR". Eine lokale Applikation ist insbesondere eine Applikation, welche nicht in dem zentralen APP-Store eingebracht ist.

Die zweite Management-Domain ist insbesondere eine "Industrial Appstore Runtime" oder auch kurz "IAR".

Insbesondere bedeutet der Begriff "remoter APP-Store", dass dieser APP-Store nicht in der ersten Management-Domain angeordnet ist, jedoch aber mit der ersten Management-Domain verbunden ist, um Zugriff auf Applikationen dieses APP-Stores zu ermöglichen.

Gemäß einer weiteren Ausführungsform weist der Webserver eine Uniform Resource Locator-Handlerkette mit mehreren Uniform Resource Locator-Handlern auf, wobei der Proxy-Adapter in dem Webserver am Ende der Uniform Resource Locator-Handlerkette angeordnet ist.

Gemäß einer weiteren Ausführungsform sind die mehreren Uniform Resource Locator-Handler der Uniform Resource Locator-Handlerkette in Reihe nacheinander in dem Webserver angeordnet, wobei jeder Uniform Resource Locator-Handler der Uniform Resource Locator-Handlerkette dazu eingerichtet ist, die empfangene Web-Anfrage zu dem nächsten Uniform Resource Locator-Handler in der Reihe weiterzuleiten, wobei der letzte Uniform Resource Locator-Handler in der Reihe dazu eingerichtet ist, die weitergeleitete empfangene Web-Anfrage an den Proxy-Adapter zu übertragen und die transformierte Web-Antwort von dem Proxy-Adapter zu empfangen.

Die Anordnung des Proxy-Adapters am Ende der URL-Handlerkette gemäß dieser Ausführungsform hat folgende Vorteile:
Diese besondere Anordnung des Proxy-Adapters führt dazu, dass alle in der ersten Management-Domain nicht behandelten Web-Anfragen, insbesondere URL-Anfragen, durch den Proxy-Adapter entgegengenommen werden, wohingegen im Stand der Technik ohne diese besondere Anordnung, eine http-Fehler-404-Nachricht für jede nicht behandelte Web-Anfrage zurückgegeben werden würde.

Zudem sind die URL-Handler der URL-Handlerkette und damit die Webseiten der ersten Management-Domain höher priorisiert als die Proxy-Einheit und damit auch die dahinter liegenden Webserver in der IAR und dessen Apps. Dies ist insbesondere für die Management-Webseiten für die erste Management-Domain erwünscht, da die IAR lediglich ein nachgelagertes Subsystem nach der ersten Management-Domain ist.

Zusätzlich vermeidet die Anordnung des Proxy-Adapters als letzter URL-Handler in der URL-Handlerkette, dass sich die hohen Latenzen, die die Proxy-Einheit unweigerlich mit sich bringt, negativ auf die URL-Handler der URL-Handlerkette und damit auf Webseiten der ersten Management-Domain auswirken.

Insbesondere ist der letzte Uniform Resource Locator-Handler in der Reihe dazu eingerichtet, die weitergeleitete empfangene Web-Anfrage an den Proxy-Adapter zu übertragen und die transformierte Web-Antwort als Teil einer Antwortkette von dem Proxy-Adapter zu empfangen.

Vorzugsweise weisen die mehreren Uniform Resource Locator-Handler der Handlerkette einen ersten URL-Handler und einen zweiten URL-Handler auf, wobei der zweite URL-Handler auch als der nächste URL-Handler bezeichnet werden kann. Insbesondere werden der erste und der zweite URL-Handler durch ein Backend-Webframework realisiert. Ein Beispiel für ein solches Webframework ist das Node.js basierte Express.js.

Zudem kann der erste URL-Handler für statische Webseiten zuständig sein, während der zweite URL-Handler für dynamisch generierte Webseiten zuständig sein kann.

Gemäß einer weiteren Ausführungsform ist der Proxy-Adapter zum Transformieren der Web-Anfrage in die Web-Antwort dazu eingerichtet, die Web-Anfrage in eine Netzwerk-Anfrage, insbesondere in eine HTTP-Anfrage, umzuwandeln, die Netzwerk-Anfrage an die zu dem Webserver getrennt und nachgelagert angeordnete Proxy-Einheit zu übertragen, eine Netzwerk-Antwort, insbesondere eine HTTP-Antwort, von der zu dem Webserver getrennt und nachgelagert angeordneten Proxy-Einheit in Abhängigkeit des Webservices und auf Basis der Netzwerk-Anfrage zu empfangen und die empfangene Netzwerk-Antwort in die Web-Antwort umzuwandeln.

Der Begriff "Transformieren" beschreibt insbesondere eine Informationstransformation, da der Dateninhalt des zu transformierenden Mediums sich ändert, hier nämlich der Dateninhalt der Web-Anfrage in einen Dateninhalt der Web-Antwort.

Der Begriff "Umwandeln" beschreibt vorzugsweise eine Formatumwandlung, da sich das Format des zu übertragenden bzw. umwandelnden Mediums ändert. Hier wird beispielsweise die Web-Anfrage in einem Computerformat, wie Quellcode oder Software-Code (Programmiercode), in eine Netzwerk-Anfrage im HTTP-Format umgewandelt. Das zu übertragende bzw. umwandelnde Medium ändert sich hier insbesondere von dem Computerformat in Form der Web-Anfrage hin zu einem Netzwerk-Format, wie dem HTTP-Format, in Form der Netzwerk-Anfrage.

Gemäß einer weiteren Ausführungsform ist die Proxy-Einheit dazu eingerichtet, auf Basis der empfangenen Netzwerk-Anfrage und in Abhängigkeit einer Konfigurationsdatei der Proxy-Einheit zum Erhalten eines Weiterleitungsergebnisses zu überprüfen, ob ein bestimmter mittels der Netzwerk-Anfrage angefragter Webservice in der zweiten Management-Domain zum Weiterleiten der Netzwerk-Anfrage an diesen bestimmten Webservice vorhanden ist oder nicht, wobei das Weiterleitungsergebnis positiv ist, wenn der bestimmte Webservice in der zweiten Management-Domain vorhanden ist, wobei das Weiterleitungsergebnis negativ ist, wenn der bestimmte Webservice nicht in der zweiten Management-Domain vorhanden ist, wobei, wenn das erhaltene Weiterleitungsergebnis positiv ist, die Netzwerk-Antwort als eine Positivnachricht ausgebildet ist, wobei, wenn das erhaltene Weiterleitungsergebnis negativ ist, die Netzwerk-Antwort als eine Fehlernachricht, insbesondere eine HTTP-Error-Nachricht, ausgebildet ist.

Mit anderen Worten überprüft die Proxy-Einheit mit Hilfe ihrer Konfiguration, ob die umgewandelte Netzwerk-Anfrage an einen ihr zugeordneten bestimmten Webservice zur Verarbeitung weitergeleitet werden kann und - bei positivem Ergebnis der Überprüfung (positives Weiterleitungsergebnis) - führt sie diese Weiterleitung durch. Anschließend empfängt die Proxy-Einheit dann von dem bestimmten Webservice oder einem mit dem bestimmten Webservice verbundenen Webserver dann eine Positivnachricht. Die Proxy-Einheit wiederrum leitet die Positivnachricht in Form der Netzwerk-Antwort an den Proxy-Adapter weiter. Falls der bestimmte Webservice nicht vorhanden ist, generiert (je nach Situation) entweder die Proxy-Einheit oder einer ihrer nachgelagerten Webserver eine Fehlernachricht, insbesondere die HTTP-Error-Nachricht (negatives Weiterleitungsergebnis).

Wenn das Weiterleitungsergebnis negativ ist, weil der bestimmte Webservice nicht in der zweiten Management-Domain vorhanden ist, kann es entweder sein, dass der Proxy-Einheit zwar der bestimmte mittels der Netzwerk-Anfrage angefragte Webservice bekannt ist, jedoch die Proxy-Einheit nicht mit diesem (beispielsweise über einen nachgelagerten Webserver der zweiten Management-Domain) verbunden ist und deshalb die Fehlernachricht generiert wird. In einem anderen Fall ist insbesondere der Proxy-Einheit der bestimmte mittels der Netzwerk-Anfrage angefragte Webservice nicht bekannt und deshalb wird die Fehlernachricht generiert.

Insbesondere kommen eine Antwort eines nachgelagerten Webservers (eine Positivnachricht), welcher hinter der Proxy-Einheit in der zweiten Management-Domain angeordnet ist, oder auch die Fehlernachricht als Antwort auf die von dem Proxy-Adapter generierte Netzwerk-Anfrage wieder an den Proxy-Adapter zurück. Auf diesem Rückweg wandelt der Proxy-Adapter die http-Antwort (Netzwerk-Antwort), die von der Proxy-Einheit eintrifft, wieder in eine Web-Antwort für die Komponenten des Webservers der ersten Management-Domain um und speist diese Web-Antwort in die Antwortkette der Komponenten des Webservers ein. Abschließend kann ein Basis-Webserver im Portalwebserver die entsprechende Web-Antwort an den anfragenden Client, wie z.B. einen Webbrowser, ausliefern.

Gemäß einer weiteren Ausführungsform weist das Kommunikationssystem ferner einen Zertifikatsspeicher zum Speichern von digitalen Zertifikaten auf, wobei die gespeicherten digitalen Zertifikate ein erstes digitales Zertifikat für den Webserver und ein zweites digitales Zertifikat für die Proxy-Einheit aufweisen, wobei der Zertifikatsspeicher dazu eingerichtet ist, das erste digitale Zertifikat in Abhängigkeit des Webservers zu speichern und für den Webserver bereitzustellen und das zweite digitale Zertifikat in Abhängigkeit der Proxy-Einheit zu speichern und für die Proxy-Einheit bereitzustellen.

Ein Zertifikationsspeicher (engl. Certificate Store) dient dazu, digitale Zertifikate sicher auf einem Computersystem zu verwahren. Da die erste Management-Domain und die zweite Management-Domain den gemeinsamen Zertifikatsspeicher verwenden, erleichtert dies in vorteilhafter Weise das Management der digitalen Zertifikate beider Management-Domains.

Insbesondere ist der Zertifikatsspeicher mit einer Zertifizierungsstelle (engl. Certificate Authority (CA)) verbunden. Vorzugsweise ist die Zertifizierungsstelle extern zu dem Kommunikationssystem angeordnet. Eine Zertifizierungsstelle (engl. Certificate Authority (CA)) ist eine Entität, die digitale Zertifikate speichert, signiert und ausstellt. Ein digitales Zertifikat bescheinigt den Besitz eines öffentlichen Schlüssels durch das benannte Subjekt des Zertifikats. Ein digitales Zertifikat ist ein digitaler Datensatz, meist nach Standards der ITU-T oder der IETF, der bestimmte Eigenschaften von Personen oder Objekten bestätigt und dessen Authentizität und Integrität durch kryptografische Verfahren geprüft werden kann.

Gemäß einer weiteren Ausführungsform sind der Webserver und die Proxy-Einheit in Abhängigkeit des ersten digitalen Zertifikats und des zweiten digitalen Zertifikats dazu eingerichtet, einen verschlüsselten Kanal zwischen dem Proxy-Adapter und der Proxy-Einheit zum gesicherten Übertragen der Netzwerk-Anfrage und der Netzwerk-Antwort zwischen dem Proxy-Adapter und der Proxy-Einheit aufzubauen, wobei der verschlüsselte Kanal insbesondere mittels HTTPS gesichert ist.

Der verschlüsselte Kanal zwischen dem Proxy-Adapter und der Proxy-Einheit erhöht die Sicherheit des Kommunikationssystems, da nun eine mittels des verschlüsselten Kanals gesicherte Ende-zu-Ende-Sicherheit zwischen der ersten und der zweiten Management-Domain aufgebaut wird. Zudem wird keine Ende-zu-Ende- Sicherheit mehr aufgebrochen, da jede Kommunikation zwischen dem Proxy-Adapter und der Proxy-Einheit nun gesichert mittels HTTPS über den verschlüsselten Kanal erfolgt.

Insgesamt sind das erste und das zweite digitale Zertifikat von einer gemeinsam (also von der ersten und der zweiten Management-Domain) getrusteten (vertrauenswürdigen) Zertifizierungsstelle signiert. Damit ist das wechselseitige Vertrauen zwischen dem Proxy-Adapter des Portalwebservers der ersten Management-Domain und der Proxy-Einheit für die zweite Management-Domain sichergestellt. Auf dieser Basis kann auch der obige verschlüsselte Kanal zwischen beiden realisiert werden. Vorzugsweise ist eine Authentifizierung des Proxy-Adapters gegenüber der Proxy-Einheit nicht erforderlich, da der Proxy-Adapter hier als ein weiterer Client auftritt. Relevant für die Zugriffsrechte auf einen weiteren Webserver in der zweiten Management-Domain können die Anmeldeinformationen des Clients sein. Diese werden insbesondere vom Proxy-Adapter zu der Proxy-Einheit weitergeleitet.

Der Aufbau des verschlüsselten Kanals erfolgt insbesondere wie folgt:
Zuerst wird das erste Zertifikat von einer zu dem Kommunikationssystem externen übergeordneten Zertifizierungsstelle signiert. Das erste Zertifikat ist hier insbesondere als ein CA-Zertifikat ausgebildet.

Anschließend ruft die Proxy-Einheit das zweite Zertifikat und den dazugehörigen privaten Schlüssel aus dem Zertifikatsspeicher ab. Das zweite Zertifikat ist hier insbesondere als ein Serverzertifikat ausgebildet. Zudem ist das zweite Zertifikat vorzugsweise mit dem ersten Zertifikat signiert.

Dann authentifiziert sich die Proxy-Einheit gegenüber dem Proxy-Adapter bzw. dem Webserver mit seinem signierten zweiten Zertifikat. Der Proxy-Adapter prüft insbesondere das signierte erste Zertifikat, mittels welchem das zweite Zertifikat signiert wurde, anhand der Zertifikate, welche in dem Zertifikatsspeicher enthalten sind. Der Zertifikatsspeicher weist alle Zertifikate, wie beispielsweise das CA-Zertifikat, auf, welche vertrauenswürdig sind.

Da sowohl die Proxy-Einheit als auch der Proxy-Adapter der gleichen Zertifizierungsstelle vertrauen und damit das signierte erste Zertifikat vertrauenswürdig ist, ist die Authentifizierung erfolgreich.

Vorzugsweise handeln dann die Proxy-Einheit als auch der Proxy-Adapter untereinander Sitzungsschlüssel aus, um damit dann den verschlüsselten Kanal aufzubauen.

Gemäß einem zweiten Aspekt wird ein industrielles Automatisierungsgerät, insbesondere Prozesssteuerungsgerät, zum Verarbeiten einer Web-Anfrage von einem Client zum Abrufen eines Webservices in einem spezifischen Netzwerk vorgeschlagen. Das industrielle Automatisierungsgerät weist auf:
einen Webserver zum Empfangen der Web-Anfrage von dem Client und zum Übertragen einer auf Basis der Web-Anfrage transformierten Web-Antwort zurück an den Client,
eine zu dem Webserver getrennt angeordnete und zu dem Webserver auf dem industriellen Automatisierungsgerät nachgelagert angeordnete Proxy-Einheit, welche mit dem Webservice gekoppelt ist,
wobei der Webserver einen Proxy-Adapter aufweist, welcher dazu eingerichtet ist, den Webserver an die zu dem Webserver getrennt und nachgelagert angeordnete Proxy-Einheit zu koppeln,
wobei der Proxy-Adapter ferner dazu eingerichtet ist, die Web-Anfrage in Abhängigkeit der zu dem Webserver getrennt und nachgelagert angeordneten Proxy-Einheit sowie des Webservices in die Web-Antwort zu transformieren.

Das Prozesssteuerungsgerät ist insbesondere ein IoT-Gerät oder ein Edge-Gerät. Es kann als eine speicherprogrammierbare Steuerung (SPS, engl. "programmable logic controller (PLC)") ausgebildet sein. Insbesondere kann das Prozesssteuerungsgerät in Form einer Software ausgebildet sein oder Teile des Prozessteuerungsgeräts können als Software ausgebildet sein. Zudem können auch gleichzeitig andere Teile des Prozesssteuerungsgeräts in Hardware realisiert sein.

Gemäß dem zweiten Aspekt sind die erste Management-Domain und die zweite Management-Domain nicht räumlich getrennt voneinander angeordnet, sondern auf einem einzigen Gerät, nämlich dem industriellen Automatisierungsgerät implementiert.

Die für das Kommunikationssystem gemäß dem ersten Aspekt beschriebenen technischen Effekte und Vorteile gelten gleichermaßen für das industrielle Automatisierungsgerät gemäß dem zweiten Aspekt.

Ferner gelten die Ausführungsformen und Merkmale, die unter Bezugnahme auf das Kommunikationssystem gemäß dem ersten Aspekt beschrieben sind, gleichermaßen auch für das industrielle Automatisierungsgerät gemäß dem zweiten Aspekt.

Gemäß einer Ausführungsform des zweiten Aspekts sind der Webserver in einer ersten Management-Domain und die von dem Webserver getrennt und nachgelagert angeordnete Proxy-Einheit in einer zweiten Management-Domain angeordnet, wobei die erste Management-Domain und die zweite Management-Domain logisch voneinander getrennt sind.

Gemäß einer weiteren Ausführungsform des zweiten Aspekts sind die erste Management-Domain als eine lokale dezentrale Applikations-Laufzeitumgebung, welche einen lokalen oder remoten APP-Store mit zumindest einer lokalen Applikation aufweist, und die zweite Management-Domain als eine weitere lokale dezentrale Applikations-Laufzeitumgebung, welche einen zentralen APP-Store mit zumindest einer zentral abgelegten Applikation aufweist, ausgebildet.

Gemäß einer weiteren Ausführungsform des zweiten Aspekts ist die lokale dezentrale Applikations-Laufzeitumgebung dazu eingerichtet, in Abhängigkeit der empfangenen Web-Anfrage ein Ziehen der lokalen Applikation auf das industrielle Automatisierungsgerät durchzuführen, wobei die weitere lokale dezentrale Applikations-Laufzeitumgebung dazu eingerichtet ist, in Abhängigkeit einer über die Proxy-Einheit empfangenen Netzwerk-Anfrage den Webservice zu laden und der Proxy-Einheit zur Bereitstellung an den Client bereitzustellen.

Der Begriff "Ziehen einer lokalen Applikation" kann auch als ein "Pullen" einer lokalen Applikation bezeichnet werden. Der Vorgang, dass die weitere lokale dezentrale Applikations-Laufzeitumgebung dazu eingerichtet ist, in Abhängigkeit einer über die Proxy-Einheit empfangenen Netzwerk-Anfrage den Webservice zu laden und der Proxy-Einheit zur Bereitstellung an den Client bereitzustellen, kann auch als ein "Drücken" oder ein "Pushen" des Webservices oder einer zentral abgelegten Applikation auf die Proxy-Einheit bezeichnet werden.

Gemäß einer weiteren Ausführungsform des zweiten Aspekts ist der Proxy-Adapter zum Transformieren der Web-Anfrage in die Web-Antwort dazu eingerichtet, die Web-Anfrage in eine Netzwerk-Anfrage, insbesondere in eine HTTP-Anfrage, umzuwandeln, die Netzwerk-Anfrage an die zu dem Webserver getrennt und nachgelagert angeordnete Proxy-Einheit zu übertragen, eine Netzwerk-Antwort, insbesondere eine HTTP-Antwort, von der zu dem Webserver getrennt und nachgelagert angeordneten Proxy-Einheit in Abhängigkeit des Webservices und auf Basis der Netzwerk-Anfrage zu empfangen und die empfangene Netzwerk-Antwort in die Web-Antwort umzuwandeln.

Gemäß einer weiteren Ausführungsform des zweiten Aspekts sind die lokale Applikation und die zentral abgelegte Applikation dazu eingerichtet, Steuerungs- und Regelungsvorgänge in Abhängigkeit des industriellen Automatisierungsgeräts in einem Kommunikationssystem durchzuführen.

Gemäß einer weiteren Ausführungsform des zweiten Aspekts sind die lokale Applikation und die zentral abgelegte Applikation dazu eingerichtet, Sensordaten von Sensoren aus dem Kommunikationssystem zu erfassen, zu verdichten und/oder zu verarbeiten.

Gemäß einer weiteren Ausführungsform des zweiten Aspekts sind die lokale Applikation und die zentral abgelegte Applikation dazu eingerichtet, Steuerungsdaten zumindest von dem industriellen Automatisierungsgerät auszugegeben.

Gemäß einer weiteren Ausführungsform des zweiten Aspekts ist das industrielle Automatisierungsgerät dazu eingerichtet, in Abhängigkeit des Webservices Prozesse und/oder Anlagen des Kommunikationssystems zu beobachten und/oder zu steuern.

Gemäß einer weiteren Ausführungsform des zweiten Aspekts ist der Webserver ferner dazu eingerichtet, in Abhängigkeit des Webservices und in Abhängigkeit der zumindest einen lokalen Applikation, weitere Prozesse und/oder weitere Anlagen des Kommunikationssystems zu beobachten und/oder zu steuern.

Gemäß einer weiteren Ausführungsform des zweiten Aspekts ist der Webserver ferner dazu eingerichtet, Verwaltungsprozesse in der ersten Management-Domain und/oder in der zweiten Management-Domain durchzuführen.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen. Unabhängig vom grammatikalischen Geschlecht eines bestimmten Begriffes sind Personen mit männlicher, weiblicher oder anderer Geschlechteridentität mit umfasst.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein schematisches Blockschaltbild einer Web-Plattform gemäß dem Stand der Technik;
- Fig. 2: zeigt ein schematisches Blockschaltbild eines Kommunikationssystems gemäß einer Ausführungsform;
- Fig. 3: zeigt ein schematisches Blockschaltbild eines Webservers gemäß einer Ausführungsform; und
- Fig. 4: zeigt ein schematisches Blockschaltbild eines industriellen Automatisierungsgeräts gemäß einer Ausführungsform.

In den Figuren sind gleiche oder funktionsgleiche Elemente mit denselben Bezugszeichen versehen worden, sofern nichts anderes angegeben ist.

Fig. 1 zeigt ein schematisches Blockschaltbild einer Web-Plattform 90 gemäß dem Stand der Technik. Die Web-Plattform 90 der Fig. 1 weist, wie bereits in der Einleitung beschrieben, eine erste Management-Domain LAR, welche als eine lokale dezentrale Applikationslaufzeitumgebung mit einem hier lokalen APP-Store L_Store ausgebildet ist, sowie eine zweite Management-Domain IAR, welche als eine weitere lokale dezentrale Applikationslaufzeitumgebung mit einem zentralen APP-Store I_Store ausgebildet ist, auf.

Wie in Fig. 1 dargestellt, ist eine Proxy-Einheit 10 der ersten Management-Domain LAR zugeordnet.

Im Fall der ersten Management-Domain LAR erfolgt das Management des lokalen oder remoten APP-Stores L_Store und dessen Applikationen über eine erste Webserver-Einheit 35. Hingegen im Fall der zweiten Management-Domain IAR erfolgt das Management des zentralen APP-Stores I_Store und dessen Applikationen über eine zweite Webserver-Einheit 36.

In Fig. 1 sind die beiden Webserver-Einheiten 35, 36 über die vorgeschaltete Proxy-Einheit 10 integriert.

Hierbei wird in der Proxy-Einheit 10 jedem dahinter liegenden Sub-Webserver, also der ersten und der zweiten Webserver-Einheit 35, 36, eine Sub-URL zugeordnet, unter der dieser jeweilige Webserver von außen über die Proxy-Einheit 10 erreichbar ist. Damit ist der zentrale Eingangspunkt in die Web-Plattform 90 in der Fig. 1 im Stand der Technik die Proxy-Einheit 10. Die Proxy-Einheit 10 übernimmt hierbei die Verteilung der eintreffenden Web-Anfragen, beispielsweise der Web-Anfrage W_Req auf die jeweiligen Sub-Webserver wie die erste Webserver-Einheit 35 oder die zweite Webserver-Einheit 36. In der Fig. 1 ist die Web-Anfrage W_Req für die zweite Management-Domain IAR bestimmt, also wird diese an die zweite Webserver-Einheit 36 weitergeleitet.

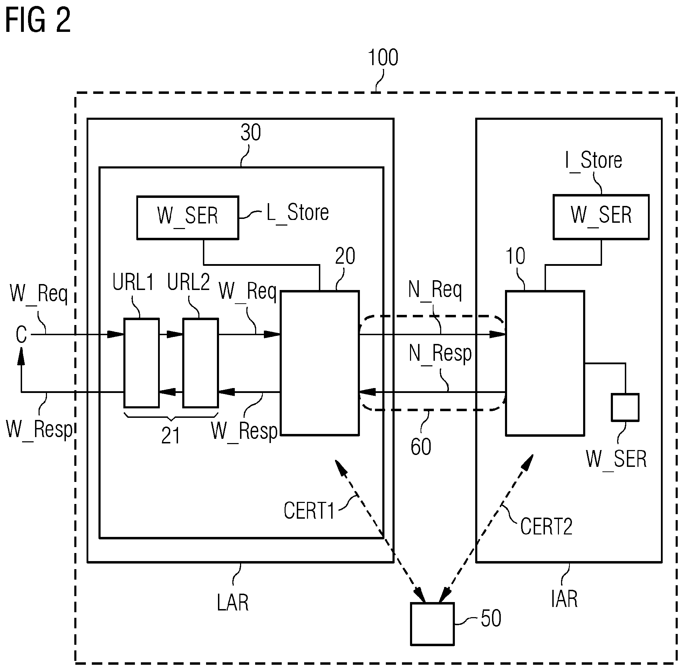

Fig. 2 zeigt ein schematisches Blockschaltbild eines Kommunikationssystems 100 gemäß einer Ausführungsform. Das Kommunikationssystem 100 der Fig. 2 ist als ein Automatisierungssystem ausgebildet, welches zum Verarbeiten einer Web-Anfrage W_Req von einem Client C zum Abrufen eines Webservices W_SER in einem spezifischen Netzwerk ausgebildet ist. Das Kommunikationssystem 100 der Fig. 2 weist einen Webserver 30 und eine Proxy-Einheit 10 auf.

Der Webserver 30 ist in Fig. 2 in einer ersten Management-Domain LAR angeordnet, wobei die erste Management-Domain LAR als eine lokale dezentrale Applikations-Laufzeitumgebung, welche einen lokalen oder remoten APP-Store L_Store mit zumindest einer lokalen Applikation aufweist, ausgebildet ist. Die von dem Webserver 30 getrennt und nachgelagert angeordnete Proxy-Einheit 10 ist in einer zweiten Management-Domain IAR angeordnet, wobei die zweite Management-Domain IAR als eine weitere lokale dezentrale Applikations-Laufzeitumgebung, welche einen zentralen APP-Store I_Store mit zumindest einer zentral abgelegten Applikation aufweist, ausgebildet ist. Zudem sind die erste Management-Domain LAR und die zweite Management-Domain IAR logisch voneinander getrennt. Zudem erfolgt das Management des zentralen APP-Stores I_Store und dessen Applikationen über eine in Fig. 2 nicht dargestellte Webserver-Einheit, wie die zweite Webserver-Einheit 36 (vgl. Fig. 1), welche zwischen der Proxy-Einheit 10 und dem zentralen APP-Stores I_Store angeordnet ist (nicht gezeigt).

Ferner ist der Webserver 30 zum Empfangen der Web-Anfrage W_Req von dem Client C und zum Übertragen einer auf Basis der Web-Anfrage W_Req transformierten Web-Antwort W_Resp zurück an den Client C ausgebildet. Die Proxy-Einheit 10 ist zu dem Webserver 30 getrennt angeordnet und zu dem Webserver 30 in dem Kommunikationssystem 100 nachgelagert angeordnet und mit dem Webservice W_SER gekoppelt. Somit ist in Fig. 2 der Webserver 30 vorgelagert zu der Proxy-Einheit 10 angeordnet.

Überdies weist der Webserver 30 einen Proxy-Adapter 20 auf, welcher dazu eingerichtet ist, den Webserver 30 an die zu dem Webserver 30 getrennt und nachgelagert angeordnete Proxy-Einheit 10 zu koppeln.

Dabei ist der Proxy-Adapter 20 ferner dazu eingerichtet, die Web-Anfrage W_Req in Abhängigkeit der zu dem Webserver 30 getrennt und nachgelagert angeordneten Proxy-Einheit 10 sowie dem Webservice W_SER in die Web-Antwort W_Resp zu transformieren.

Hierbei ist der Proxy-Adapter 20 zum Transformieren der Web-Anfrage W_Req in die Web-Antwort W_Resp dazu eingerichtet, die Web-Anfrage W_Req in eine Netzwerk-Anfrage N_Req, hier eine HTTP-Anfrage, umzuwandeln, die Netzwerk-Anfrage N_Req an die zu dem Webserver 30 getrennt und nachgelagert angeordnete Proxy-Einheit 10 zu übertragen, eine Netzwerk-Antwort N_Resp, hier eine HTTP-Antwort, von der zu dem Webserver 30 getrennt und nachgelagert angeordneten Proxy-Einheit 10 in Abhängigkeit des Webservices W_SER und auf Basis der Netzwerk-Anfrage N_Req zu empfangen und die empfangene Netzwerk-Antwort N_Resp in die Web-Antwort W_Resp umzuwandeln.

Wie ebenfalls in Fig. 2 dargestellt, weist der Webserver 30 eine Uniform Resource Locator-Handlerkette 21 mit mehreren Uniform Resource Locator-Handlern URL1, URL2 auf, wobei der Proxy-Adapter 20 in dem Webserver 30 am Ende der Uniform Resource Locator-Handlerkette 21 angeordnet ist.

Hierbei sind die mehreren Uniform Resource Locator-Handler URL1, URL2 in Reihe nacheinander in dem Webserver 30 angeordnet, wobei jeder Uniform Resource Locator-Handler URL1, URL2 dazu eingerichtet ist, die empfangene Web-Anfrage W_Req zu dem nächsten Uniform Resource Locator-Handler in der Reihe weiterzuleiten. Dabei ist der letzte Uniform Resource Locator-Handler in der Reihe dazu eingerichtet, die weitergeleitete empfangene Web-Anfrage W_Req an den Proxy-Adapter 20 zu übertragen und die transformierte Web-Antwort W_Resp von dem Proxy-Adapter 20 zu empfangen.

Weiterhin weist das Kommunikationssystem 100 der Fig. 2 einen Zertifikatsspeicher 50 zum Speichern von digitalen Zertifikaten auf. Der Zertifikatsspeicher 50 ist mit einer Zertifizierungsstelle (nicht gezeigt) verbunden. Diese gespeicherten digitalen Zertifikate weisen ein erstes digitales Zertifikat CERT1 für den Webserver 30 und ein zweites digitales Zertifikat CERT2 für die Proxy-Einheit 10 auf.

Der Zertifikatsspeicher 50 ist dabei dazu eingerichtet, das erste digitale Zertifikat CERT1 in Abhängigkeit des Webservers 30 zu speichern und für den Webserver 30 bereitzustellen und das zweite digitale Zertifikat CERT2 in Abhängigkeit der Proxy-Einheit 10 zu speichern und für die Proxy-Einheit 10 bereitzustellen.

Ferner sind der Webserver 30 und die Proxy-Einheit 10 in Abhängigkeit des ersten digitalen Zertifikats CERT1 und des zweiten digitalen Zertifikats CERT2 dazu eingerichtet, einen verschlüsselten Kanal 60 zwischen dem Proxy-Adapter 20 und der Proxy-Einheit 10 zum gesicherten Übertragen der Netzwerk-Anfrage N_Req und der Netzwerk-Antwort N_Resp zwischen dem Proxy-Adapter 20 und der Proxy-Einheit 10 aufzubauen, wobei der verschlüsselte Kanal 60 insbesondere mittels HTTPS gesichert ist.

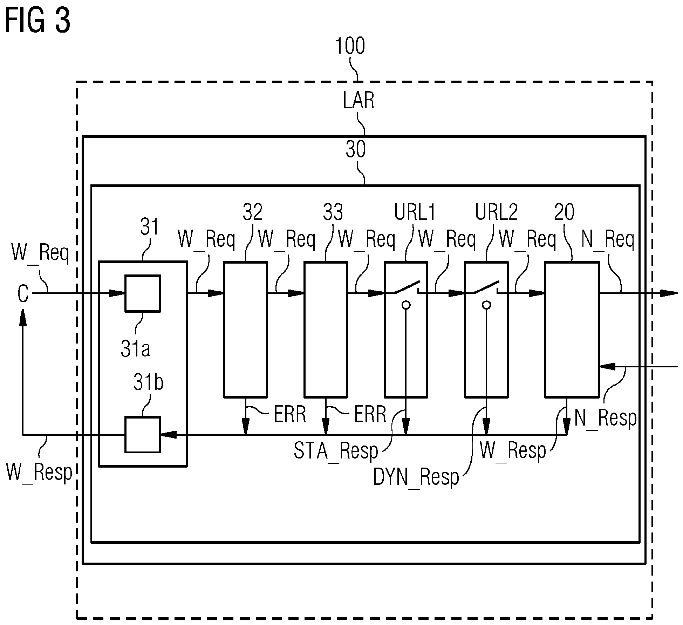

Fig. 3 zeigt ein schematisches Blockschaltbild eines Webservers 30 gemäß einer Ausführungsform mit dem Proxy-Adapter 20. Überdies weist der Webserver 30 der Fig. 3 einen Basis-Webserver 31, eine Applikations-Firewall 32, eine Authentifizierungskomponente 33 sowie einen ersten URL-Handler URL1 und einen zweiten URL-Handler URL2, welche die URL-Handlerkette 21 (vgl. Fig. 2) ausbilden, auf. Der erste URL-Handler URL1 ist für statische Webseiten zuständig, während der zweite URL-Handler URL2 für dynamische Webseiten zuständig ist.

Fig. 3 zeigt den Weg einer Web-Anfrage W_Req durch den Webserver 30 der Fig. 3.

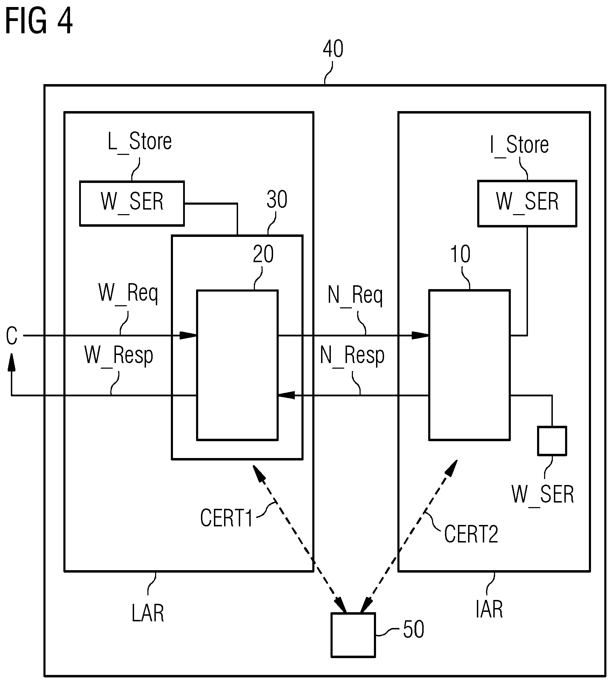

Der Basis-Webserver 31 ist für die Annahme der Web-Anfrage W_Req bzw. von Web-Anfragen und das Versenden der Web-Antworten W_Resp zuständig. Der Basis-Webserver 31 wird durch eine Reihe von URL-Handlern URL1, URL2 ergänzt, die im Webserver 30 für die Behandlung von spezifischen Web-Anfragen registriert sind. Ein Typ eines Web-Anfragen-Handlers, beispielsweise der erste URL-Handler URL1, registriert sich z.B. für dedizierte URLs, beispielsweise für URLs auf statische Webseiten. Eintreffende Web-Anfragen W_Req werden vom Basis-Webserver 31 an den jeweiligen zuständigen registrierten URL-Handler weitergeleitet. Der oder die zuständigen URL-Handler bearbeiten dann die Web-Anfrage W_Req und erzeugen die entsprechenden Antworten. Diese Antworten (z.B. Webservices W_SER (vgl. Fig. 2 und 4) wie Webpages) werden an einen Antwortsender 31b des Basis-Webservers 31 zurückgegeben und von dem Antwortsender 31b an den Client C gesendet.

Nachfolgend wird dies im Detail erläutert:
Ein Client C sendet eine Web-Anfrage W_Req, die nach Passieren einer Netzwerk-Firewall (nicht gezeigt) von einem Anfragenempfänger 31a des Basis-Webservers 31 empfangen wird.

Anschließend wird die Web-Anfrage W_Req an eine optionale, jedoch in Fig. 3 vorhandene Applikations-Firewall 32 weitergeleitet. Eine Applikations-Firewall 32, insbesondere eine Web-Applikations-Firewall, dient dazu, Webanwendungen vor Angriffen über das HTTP-Protokoll zu schützen. Lehnt die Applikations-Firewall 32 die Web-Anfrage W_Req ab, wird eine Fehler-Nachricht ERR an den Client C zurückgeschickt.

Wurde die Web-Anfrage W_Req nicht durch die Applikations-Firewall 32 abgelehnt, geht diese an eine optionale, jedoch in der Fig. 3 vorhandene Authentifizierungskomponente 33, in welcher der Client C authentisiert wird. Wird der Client C nicht akzeptiert, wird wieder eine Fehlernachricht ERR (oft in Form einer HTML-Seite) an den Client C zurückgeschickt.

War diese Authentifizierung des Clients C erfolgreich, wird die Web-Anfrage W_Req von einem URL-Handler z.B. für statischen HTML-Seiten, also hier der erste URL-Handler URL1 verarbeitet. Wird die Web-Anfrage W_Req von einer statischen HTML-Seite erfüllt, geht eine statische Antwort STA_Resp in Form der statischen HTML-Seite zurück an den Client C.

Wurde die Web-Anfrage W_Req in dem ersten URL-Handler URL1 noch nicht positiv bearbeitet, wird diese an den nächsten URL-Handler weitergeleitet und dort verarbeitet. Dies ist in Fig. 3 der zweite URL-Handler URL2, welcher dynamisch generierte Inhalte erzeugt und dynamische Webseiten verarbeitet.

Kann die Web-Anfrage W_Req in dem zweiten URL-Handler URL2 erfüllt werden, geht eine dynamische Antwort DYN_Resp, beispielsweise in Form einer generierten HTML-Seite oder einer Datenbeschreibung im json-Format, an den Client C zurück. Kann die Web-Anfrage W_Req in dem zweiten URL-Handler URL2 nicht erfüllt werden, würde im Stand der Technik eine Nachricht (nicht gezeigt) in Form des http-Fehlers-404 ("not found") an den Client C zurückgehen.

Allerdings weist der Webserver 30 nun den Proxy-Adapter 20 auf. Dies bedeutet, dass wenn die Web-Anfrage W_Req in dem zweiten URL-Handler URL2 nicht erfüllt werden kann, wird nicht wie im Stand der Technik eine Nachricht in Form des http-Fehlers-404 ("not found") an den Client C zurückgegeben, sondern die Web-Anfrage W_Req wird einfach an den Proxy-Adapter 20 weitergeleitet. Der Proxy-Adapter 20 wiederrum, wandelt die Web-Anfrage W_Req in eine Netzwerk-Anfrage N_Req um und leitet diese an die Proxy-Einheit 10 (vgl. Fig. 2 und 4) der zweiten Management-Domain IAR (vgl. Fig. 2 und 4) weiter. Anschließend überprüft die Proxy-Einheit 10 mit Hilfe ihrer Konfigurationsdatei, ob die Netzwerk-Anfrage N_Req an eine ihr zugeordneten Webservice W_SER (vgl. Fig. 2 und 4), wie einen Webserver oder eine Web-App, zur Verarbeitung weitergeleitet werden kann, um ein Weiterleitungsergebnis zu erhalten. Bei einem positiven Weiterleitungsergebnis (Positivnachricht) ist der Webservice W_SER vorhanden und die Weiterleitung durch die Proxy-Einheit 10 kann erfolgen. Falls das erhaltene Weiterleitungsergebnis negativ ist, ist die Netzwerk-Antwort N_Resp als eine Fehlernachricht ERR, hier eine HTTP-Error-Nachricht, ausgebildet.

Fig. 4 zeigt ein schematisches Blockschaltbild eines industriellen Automatisierungsgeräts 40 gemäß einer Ausführungsform. Das industrielle Automatisierungsgerät 40 ist in Fig. 4 als ein Prozesssteuerungsgerät, insbesondere als eine speicherprogrammierbare Steuerung, ausgebildet. Das industrielle Automatisierungsgerät 40 ist zum Verarbeiten einer Web-Anfrage W_Req von einem Client C zum Abrufen eines Webservices W_SER in einem spezifischen Netzwerk ausgebildet.

Das industrielle Automatisierungsgerät 40 der Fig. 4 weist einen Webserver 30 und eine Proxy-Einheit 10 auf.

Der Webserver 30 ist in Fig. 4 in einer ersten Management-Domain LAR angeordnet, wobei die erste Management-Domain LAR als eine lokale dezentrale Applikations-Laufzeitumgebung, welche einen lokalen oder remoten APP-Store L_Store mit zumindest einer lokalen Applikation aufweist, ausgebildet ist. Die von dem Webserver 30 getrennt und nachgelagert angeordnete Proxy-Einheit 10 ist in einer zweiten Management-Domain IAR angeordnet, wobei die zweite Management-Domain IAR als eine weitere lokale dezentrale Applikations-Laufzeitumgebung, welche einen zentralen APP-Store I_Store mit zumindest einer zentral abgelegten Applikation aufweist, ausgebildet ist. Zudem sind die erste Management-Domain LAR und die zweite Management-Domain IAR logisch voneinander getrennt.

Ferner ist der Webserver 30 zum Empfangen der Web-Anfrage W_Req von dem Client C und zum Übertragen einer auf Basis der Web-Anfrage W_Req transformierten Web-Antwort W_Resp zurück an den Client C ausgebildet. Die Proxy-Einheit 10 ist zu dem Webserver 30 getrennt angeordnet und zu dem Webserver 30 in dem Kommunikationssystem 100 nachgelagert angeordnet und mit dem Webservice W_SER gekoppelt. Somit ist in Fig. 4 der Webserver 30 vorgelagert zu der Proxy-Einheit 10 angeordnet.

Überdies weist der Webserver 30 einen Proxy-Adapter 20 auf, welcher dazu eingerichtet ist, den Webserver 30 an die zu dem Webserver 30 getrennt und nachgelagert angeordnete Proxy-Einheit 10 zu koppeln.

Dabei ist der Proxy-Adapter 20 ferner dazu eingerichtet, die Web-Anfrage W_Req in Abhängigkeit der zu dem Webserver 30 getrennt und nachgelagert angeordneten Proxy-Einheit 10 sowie dem Webservice W_SER in die Web-Antwort W_Resp zu transformieren.

Dabei ist der Proxy-Adapter 20 zum Transformieren der Web-Anfrage W_Req in die Web-Antwort W_Resp dazu eingerichtet, die Web-Anfrage W_Req in eine Netzwerk-Anfrage N_Req, hier eine HTTP-Anfrage, umzuwandeln, die Netzwerk-Anfrage N_Req an die zu dem Webserver 30 getrennt und nachgelagert angeordnete Proxy-Einheit 10 zu übertragen, eine Netzwerk-Antwort N_Resp, hier eine HTTP-Antwort, von der zu dem Webserver 30 getrennt und nachgelagert angeordneten Proxy-Einheit 10 in Abhängigkeit des Webservices W_SER und auf Basis der Netzwerk-Anfrage N_Req zu empfangen und die empfangene Netzwerk-Antwort N_Resp in die Web-Antwort W_Resp umzuwandeln.

Ferner ist in Fig. 4 die lokale dezentrale Applikations-Laufzeitumgebung dazu eingerichtet, in Abhängigkeit der empfangenen Web-Anfrage W_Req ein Ziehen der lokalen Applikation auf das industrielle Automatisierungsgerät 40 durchzuführen.

Die weitere lokale dezentrale Applikations-Laufzeitumgebung in Fig. 4 ist dazu eingerichtet, in Abhängigkeit einer über die Proxy-Einheit 10 empfangenen Netzwerk-Anfrage N_Req den Webservice W_SER zu laden und der Proxy-Einheit 10 zur Bereitstellung an den Client C bereitzustellen.

Überdies sind die lokale Applikation und die zentral abgelegte Applikation dazu eingerichtet, Steuerungs- und Regelungsvorgänge in Abhängigkeit des industriellen Automatisierungsgeräts 40 in einem Kommunikationssystem 100 (vgl. Fig. 2) durchzuführen, Sensordaten von Sensoren aus dem Kommunikationssystem 100 zu erfassen, zu verdichten und/oder zu verarbeiten und Steuerungsdaten zumindest von dem industriellen Automatisierungsgerät 40 auszugegeben.

Ferner ist das industrielle Automatisierungsgerät 40 dazu eingerichtet, in Abhängigkeit des Webservices W_SER Prozesse und/oder Anlagen des Kommunikationssystems 100 zu beobachten und/oder zu steuern.

Zusätzlich ist der Webserver 30 ferner dazu eingerichtet, in Abhängigkeit des Webservices W_SER und in Abhängigkeit der zumindest einen lokalen Applikation, weitere Prozesse und/oder weitere Anlagen des Kommunikationssystems 100 zu beobachten und/oder zu steuern und Verwaltungsprozesse in der ersten Management-Domain LAR und/oder in der zweiten Management-Domain IAR durchzuführen.

Obwohl die vorliegende Erfindung anhand von Ausführungsbeispielen beschrieben wurde, ist sie vielfältig modifizierbar.

Unabhängig vom grammatikalischen Geschlecht eines bestimmten Begriffes sind Personen mit männlicher, weiblicher oder anderer Geschlechteridentität mit umfasst.

## Patentansprüche

1. Kommunikationssystem (100) zum Verarbeiten einer Web-Anfrage (W_Req) von einem Client (C) zum Abrufen eines Webservices (W_SER) in einem spezifischen Netzwerk, aufweisend:
einen Webserver (30) zum Empfangen der Web-Anfrage (W_Req) von dem Client (C) und zum Übertragen einer auf Basis der Web-Anfrage (W_Req) transformierten Web-Antwort (W_Resp) zurück an den Client (C),
eine zu dem Webserver (30) getrennt angeordnete und zu dem Webserver (30) in dem Kommunikationssystem (100) nachgelagert angeordnete Proxy-Einheit (10), welche mit dem Webservice (W_SER) gekoppelt ist,
wobei der Webserver (30) einen Proxy-Adapter (20) aufweist, welcher dazu eingerichtet ist, den Webserver (30) an die zu dem Webserver (30) getrennt und nachgelagert angeordnete Proxy-Einheit (10) zu koppeln,
wobei der Proxy-Adapter (20) ferner dazu eingerichtet ist, die Web-Anfrage (W_Req) in Abhängigkeit der zu dem Webserver (30) getrennt und nachgelagert angeordneten Proxy-Einheit (10) sowie dem Webservice (W_SER) in die Web-Antwort (W_Resp) zu transformieren,
wobei der Webserver in einer ersten Management-Domain (LAR) und die von dem Webserver getrennt und nachgelagert angeordnete Proxy-Einheit in einer zweiten Management-Domain (IAR) angeordnet sind, wobei die erste Management-Domain (LAR) und die zweite Management-Domain (IAR) logisch voneinander getrennt sind, **dadurch gekennzeichnet, dass** die erste Management-Domain (LAR) als eine lokale dezentrale Applikations-Laufzeitumgebung, welche einen lokalen oder remoten APP-Store (L_Store) mit zumindest einer lokalen Applikation aufweist, und die zweite Management-Domain (IAR) als eine weitere lokale de zentrale Applikations-Laufzeitumgebung, welche einen zentralen APP-Store (I_Store) mit zumindest einer zentral abgelegten Applikation aufweist, ausgebildet sind.

2. Kommunikationssystem nach Anspruch 1 **dadurch gekennzeichnet, dass** der Webserver (30) eine Uniform Resource Locator-Handlerkette (21) mit mehreren Uniform Resource Locator-Handlern (URL1, URL2) aufweist, wobei der Proxy-Adapter (20) in dem Webserver (30) am Ende der Uniform Resource Locator-Handlerkette (21) angeordnet ist.

3. Kommunikationssystem nach Anspruch 2, **dadurch gekennzeichnet, dass** die mehreren Uniform Resource Locator-Handler (URL1, URL2) der Uniform Resource Locator-Handlerkette (21) in Reihe nacheinander in dem Webserver (30) angeordnet sind, wobei jeder Uniform Resource Locator-Handler (URL1, URL2) der Uniform Resource Locator-Handlerkette (21) dazu eingerichtet ist, die empfangene Web-Anfrage (W_Req) zu dem nächsten Uniform Resource Locator-Handler in der Reihe weiterzuleiten, wobei der letzte Uniform Resource Locator-Handler in der Reihe dazu eingerichtet ist, die weitergeleitete empfangene Web-Anfrage (W_Req) an den Proxy-Adapter (20) zu übertragen und die transformierte Web-Antwort (W_Resp) von dem Proxy-Adapter (20) zu empfangen.

4. Kommunikationssystem nach einem der Ansprüche 1 - 3, **dadurch gekennzeichnet, dass** der Proxy-Adapter (20) zum Transformieren der Web-Anfrage (W_Req) in die Web-Antwort (W_Resp) dazu eingerichtet ist, die Web-Anfrage (W_Req) in eine Netzwerk-Anfrage (N_Req) umzuwandeln, die Netzwerk-Anfrage (N_Req) an die zu dem Webserver (30) getrennt und nachgelagert angeordnete Proxy-Einheit (10) zu übertragen, eine Netzwerk-Antwort (N_Resp) von der zu dem Webserver (30) getrennt und nachgelagert angeordneten Proxy-Einheit (10) in Abhängigkeit des Webservices (W_SER) und auf Basis der Netzwerk-Anfrage (N_Req) zu empfangen und die empfangene Netzwerk-Antwort (N_Resp) in die Web-Antwort (W_Resp) umzuwandeln.

5. Kommunikationssystem nach einem der Ansprüche 1 - 4, **dadurch gekennzeichnet, dass** das Kommunikationssystem (100) ferner einen Zertifikatsspeicher (50) zum Speichern von digitalen Zertifikaten aufweist, wobei die gespeicherten digitalen Zertifikate ein erstes digitales Zertifikat (CERT1) für den Webserver (30) und ein zweites digitales Zertifikat (CERT2) für die Proxy-Einheit (10) aufweisen, wobei der Zertifikatsspeicher (50) dazu eingerichtet ist, das erste digitale Zertifikat (CERT1) in Abhängigkeit des Webservers (30) zu speichern und für den Webserver (30) bereitzustellen und das zweite digitale Zertifikat (CERT2) in Abhängigkeit der Proxy-Einheit (10) zu speichern und für die Proxy-Einheit (10) bereitzustellen.

6. Kommunikationssystem nach Anspruch 5, **dadurch gekennzeichnet, dass** der Webserver (30) und die Proxy-Einheit (10) in Abhängigkeit des ersten digitalen Zertifikats (CERT1) und des zweiten digitalen Zertifikats (CERT2) dazu eingerichtet sind, einen verschlüsselten Kanal (60) zwischen dem Proxy-Adapter (20) und der Proxy-Einheit (10) zum gesicherten Übertragen der Netzwerk-Anfrage (N_Req) und der Netzwerk-Antwort (N_Resp) zwischen dem Proxy-Adapter (20) und der Proxy-Einheit (10) aufzubauen, wobei der verschlüsselte Kanal (60) gesichert ist.

7. Industrielles Automatisierungsgerät (40) zum Verarbeiten einer Web-Anfrage (W_Req) von einem Client (C) zum Abrufen eines Webservices (W_SER) in einem spezifischen Netzwerk, aufweisend:
einen Webserver (30) zum Empfangen der Web-Anfrage (W_Req) von dem Client (C) und zum Übertragen einer auf Basis der Web-Anfrage (W_Req) transformierten Web-Antwort (W_Resp) zurück an den Client (C),
eine zu dem Webserver (30) getrennt angeordnete und zu dem Webserver (30) auf dem industriellen Automatisierungsgerät (40) nachgelagert angeordnete Proxy-Einheit (10), welche mit dem Webservice (W_SER) gekoppelt ist,
wobei der Webserver (30) einen Proxy-Adapter (20) aufweist, welcher dazu eingerichtet ist, den Webserver (30) an die zu dem Webserver (30) getrennt und nachgelagert angeordnete Proxy-Einheit (10) zu koppeln,
wobei der Proxy-Adapter (20) ferner dazu eingerichtet ist, die Web-Anfrage (W_Req) in Abhängigkeit der zu dem Webserver (30) getrennt und nachgelagert angeordneten Proxy-Einheit (10) sowie dem Webservice (W_SER) in die Web-Antwort (W_Resp) zu transformieren,
wobei der Webserver in einer ersten Management-Domain (LAR) und die von dem Webserver getrennt und nachgelagert angeordnete Proxy-Einheit in einer zweiten Management-Domain (IAR) angeordnet sind, wobei die erste Management-Domain (LAR) und die zweite Management-Domain (IAR) logisch voneinander getrennt sind, **dadurch gekennzeichnet, dass** die erste Management-Domain (LAR) als eine lokale dezentrale Applikations-Laufzeitumgebung, welche einen lokalen oder remoten APP-Store (L_Store) mit zumindest einer lokalen Applikation aufweist, und die zweite Management-Domain (IAR) als eine weitere lokale dezentrale Applikations-Laufzeitumgebung, welche einen zentralen APP-Store (I_Store) mit zumindest einer zentral abgelegten Applikation aufweist, ausgebildet sind.

8. Automatisierungsgerät nach Anspruch **dadurch gekennzeichnet, dass** die lokale dezentrale Applikations-Laufzeitumgebung dazu eingerichtet ist, in Abhängigkeit der empfangenen Web-Anfrage (W_Req) ein Ziehen der lokalen Applikation auf das industrielle Automatisierungsgerät (40) durchzuführen, wobei die weitere lokale dezentrale Applikations-Laufzeitumgebung dazu eingerichtet ist, in Abhängigkeit einer über die Proxy-Einheit (10) empfangenen Netzwerk-Anfrage (N_Req) den Webservice (W_SER) zu laden und der Proxy-Einheit (10) zur Bereitstellung an den Client (C) bereitzustellen.

9. Automatisierungsgerät nach einem der Ansprüche 7 oder 8, **dadurch gekennzeichnet, dass** der Proxy-Adapter (20) zum Transformieren der Web-Anfrage (W_Req) in die Web-Antwort (W_Resp) dazu eingerichtet ist, die Web-Anfrage (W_Req) in eine Netzwerk-Anfrage (N_Req) umzuwandeln, die Netzwerk-Anfrage (N_Req) an die zu dem Webserver (30) getrennt und nachgelagert angeordnete Proxy-Einheit (10) zu übertragen, eine Netzwerk-Antwort (N_Resp) von der zu dem Webserver (30) getrennt und nachgelagert angeordneten Proxy-Einheit (10) in Abhängigkeit des Webservices (W_SER) und auf Basis der Netzwerk-Anfrage (N_Req) zu empfangen und die empfangene Netzwerk-Antwort (N_Resp) in die Web-Antwort (W_Resp) umzuwandeln.

10. Automatisierungsgerät nach einem der Ansprüche 7 - 9, **dadurch gekennzeichnet, dass** die lokale Applikation und die zentral abgelegte Applikation dazu eingerichtet sind, Steuerungs- und Regelungsvorgänge in Abhängigkeit des industriellen Automatisierungsgeräts (40) in einem Kommunikationssystem (100) durchzuführen.

11. Automatisierungsgerät nach einem der Ansprüche 7 - 10, **dadurch gekennzeichnet, dass** die lokale Applikation und die zentral abgelegte Applikation dazu eingerichtet sind, Sensordaten von Sensoren aus dem Kommunikationssystem (100) zu erfassen, zu verdichten und/oder zu verarbeiten.

12. Automatisierungsgerät nach einem der Ansprüche 7 - 11, **dadurch gekennzeichnet, dass** die lokale Applikation und die zentral abgelegte Applikation dazu eingerichtet sind, Steuerungsdaten zumindest von dem industriellen Automatisierungsgerät (40) auszugegeben.

13. Automatisierungsgerät nach einem der Ansprüche 7 - 12, **dadurch gekennzeichnet, dass** das industrielle Automatisierungsgerät (40) dazu eingerichtet ist, in Abhängigkeit des Webservices (W_SER) Prozesse und/oder Anlagen des Kommunikationssystems (100) zu beobachten und/oder zu steuern.

14. Automatisierungsgerät nach einem der Ansprüche 7 - 13, **dadurch gekennzeichnet, dass** der Webserver (30) ferner dazu eingerichtet ist, in Abhängigkeit des Webservices (W_SER) und in Abhängigkeit der zumindest einen lokalen Applikation, weitere Prozesse und/oder weitere Anlagen des Kommunikationssystems (100) zu beobachten und/oder zu steuern.

15. Automatisierungsgerät nach einem der Ansprüche 7 - 14, **dadurch gekennzeichnet, dass** der Webserver (30) ferner dazu eingerichtet ist, Verwaltungsprozesse in der ersten Management-Domain (LAR) und/oder in der zweiten Management-Domain (IAR) durchzuführen.

## Claims

1. Communication system (100) for processing a web request (W_Req) from a client (C) to retrieve a web service (W_SER) in a specific network, comprising:
a web server (30) for receiving the web request (W_Req) from the client (C) and for transmitting a web response (W_Resp), which has been transformed on the basis of the web request (W_Req), back to the client (C),
a proxy unit (10) which is arranged separately from the web server (30) and downstream of the web server (30) in the communication system (100), and is coupled to the web service (W_SER),
wherein the web server (30) has a proxy adapter (20) which is configured to couple the web server (30) to the proxy unit (10) which is arranged separately from and downstream of the web server (30),
wherein the proxy adapter (20) is further configured to transform the web request (W_Req) into the web response (W_Resp) in a manner dependent on the proxy unit (10) which is arranged separately from and downstream of the web server (30) and dependent on the web service (W_SER),
wherein the web server is arranged in a first management domain (LAR) and the proxy unit, which is arranged separately from and downstream of the web server, is arranged in a second management domain (IAR), wherein the first management domain (LAR) and the second management domain (IAR) are logically separate from each other, **characterised in that** the first management domain (LAR) is designed as a local decentralised application runtime environment having a local or remote APP store (L_Store) with at least one local application, and the second management domain (IAR) is designed as a further local decentralised application runtime environment having a central APP store (I_Store) with at least one centrally stored application.

2. Communication system according to claim 1,
**characterised in that** the web server (30) has a uniform resource locator handler chain (21) comprising a plurality of uniform resource locator handlers (URL1, URL2), wherein the proxy adapter (20) in the web server (30) is arranged at the end of the uniform resource locator handler chain (21).

3. Communication system according to claim 2,
**characterised in that** the plurality of uniform resource locator handlers (URL1, URL2) of the uniform resource locator handler chain (21) are arranged in series one behind the other in the web server (30), wherein each uniform resource locator handler (URL1, URL2) of the uniform resource locator handler chain (21) is configured to forward the received web request (W_Req) to the next uniform resource locator handler in the series, wherein the last uniform resource locator handler in the series is configured to transmit the forwarded received web request (W_Req) to the proxy adapter (20) and to receive the transformed web response (W_Resp) from the proxy adapter (20).

4. Communication system according to one of claims 1 - 3, **characterised in that**, for the purpose of transforming the web request (W_Req) into the web response (W_Resp), the proxy adapter (20) is configured to convert the web request (W_Req) into a network request (N_Req), to transmit the network request (N_Req) to the proxy unit (10) that is arranged separately from and downstream of the web server (30), to receive a network response (N_Resp), from the proxy unit (10) that is arranged separately from and downstream of the web server (30), said network response being dependent on the web service (W_SER) and based on the network request (N_Req), and to convert the received network response (N_Resp) into the web response (W_Resp).

5. Communication system according to one of claims 1 - 4, **characterised in that** the communication system (100) also has a certificate store (50) for storing digital certificates, wherein the stored digital certificates comprise a first digital certificate (CERT1) for the web server (30) and a second digital certificate (CERT2) for the proxy unit (10), wherein the certificate store (50) is configured to store the first digital certificate (CERT1) in a manner dependent on the web server (30) and to make it available for the web server (30), and to store the second digital certificate (CERT2) in a manner dependent on the proxy unit (10) and to make it available for the proxy unit (10).

6. Communication system according to claim 5,
**characterised in that** the web server (30) and the proxy unit (10) are configured in a manner dependent on the first digital certificate (CERT1) and the second digital certificate (CERT2) to establish an encrypted channel (60) between the proxy adapter (20) and the proxy unit (10) for secure transmission of the network request (N_Req) and the network response (N_Resp) between the proxy adapter (20) and the proxy unit (10), wherein the encrypted channel (60) is secured.

7. Industrial automation device (40) for processing a web request (W_Req) from a client (C) to retrieve a web service (W_SER) in a specific network, comprising:
a web server (30) for receiving the web request (W_Req) from the client (C) and for transmitting a web response (W_Resp), which has been transformed on the basis of the web request (W_Req), back to the client (C),
a proxy unit (10) which is arranged separately from the web server (30) and downstream of the web server (30) on the industrial automation device (40), and is coupled to the web service (W_SER),
wherein the web server (30) has a proxy adapter (20) which is configured to couple the web server (30) to the proxy unit (10) which is arranged separately from and downstream of the web server (30),
wherein the proxy adapter (20) is further configured to transform the web request (W_Req) into the web response (W_Resp) in a manner dependent on the proxy unit (10) which is arranged separately from and downstream of the web server (30) and dependent on the web service (30),
wherein the web server is arranged in a first management domain (LAR) and the proxy unit, which is arranged separately from and downstream of the web server, is arranged in a second management domain (IAR), wherein the first management domain (LAR) and the second management domain (IAR) are logically separate from each other, **characterised in that** the first management domain (LAR) is designed as a local decentralised application runtime environment having a local or remote APP store (L_Store) with at least one local application, and the second management domain (IAR) is designed as a further local decentralised application runtime environment having a central APP store (I_Store) with at least one centrally stored application.

8. Automation device according to claim 7,
**characterised in that** the local decentralised application runtime environment is configured to perform a pulling of the local application onto the industrial automation device (40) in a manner dependent on the received web request (W_Req), wherein the further local decentralised application runtime environment is configured to load the web service (W_SER) in a manner dependent on a network request (N_Req) received via the proxy unit (10) and make it available to the proxy unit (10) for provision to the client (C).

9. Automation device according to one of claims 7 or 8, **characterised in that**, for the purpose of transforming the web request (W_Req) into the web response (W_Resp), the proxy adapter (20) is configured to convert the web request (W_Req) into a network request (N_Req), to transmit the network request (N_Req) to the proxy unit (10) that is arranged separately from and downstream of the web server (30), to receive a network response (N_Resp) from the proxy unit (10) that is arranged separately from and downstream of the web server (30), said network response being dependent on the web service (W_SER) and based on the network request (N_Req), and to convert the received network response (N_Resp) into the web response (W_Resp).

10. Automation device according to one of claims 7 - 9, **characterised in that** the local application and the centrally stored application are configured to carry out open-loop and closed-loop control operations in a manner dependent on the industrial automation device (40) in a communication system (100).

11. Automation device according to one of claims 7 - 10, **characterised in that** the local application and the centrally stored application are configured to capture, collate and/or process sensor data of sensors in the communication system (100).

12. Automation device according to one of claims 7 - 11, **characterised in that** the local application and the centrally stored application are configured to output control data at least of the industrial automation device (40).

13. Automation device according to one of claims 7 - 12, **characterised in that** the industrial automation device (40) is configured to monitor and/or control processes and/or facilities of the communication system (100) in a manner dependent on the web service (W_SER).

14. Automation device according to one of claims 7 - 13, **characterised in that** the web server (30) is additionally configured to monitor and/or control further processes and/or further facilities of the communication system (100) in a manner dependent on the web service (W_SER) and in a manner dependent on the at least one local application.

15. Automation device according to one of claims 7 - 14, **characterised in that** the web server (30) is additionally configured to perform management processes in the first management domain (LAR) and/or in the second management domain (IAR) .

## Revendications

1. Système (100) de communication pour le traitement d'une demande toile (W_Req) d'un client (C) pour appeler un service toile (W_SER) dans un réseau spécifique, comportant :
un serveur toile (30) de réception de la demande toile (W_Req) du client (C) et de retransmission au client (C) d'une réponse toile (W_Resp) transformée sur la base de la demande toile (W_Req),
une unité proxy (10), qui est disposée de manière séparée du serveur toile (30), qui est disposée en aval du serveur toile (30) dans le système (100) de communication et qui est couplée au service toile (W_SER),
dans lequel le serveur toile (30) a un adaptateur proxy (20), qui est agencé pour coupler le serveur toile (30) à l'unité proxy (10), disposée de manière séparée et en aval du serveur toile (30),
dans lequel l'adaptateur proxy (20) est agencé en outre pour transformer en la réponse toile (W_Resp) la demande toile (W_Req) en fonction de l'unité proxy (10), montée de manière séparée et en aval du serveur toile (30), ainsi que du service toile (W_SER),
dans lequel le serveur toile est disposé dans un premier domaine de gestion (LAR) et l'unité proxy, montée de manière séparée et en aval du serveur toile, est disposée dans un deuxième domaine (IAR) de gestion, dans lequel le premier domaine (LAR) et le deuxième domaine (IAR) de gestion sont séparés l'un de l'autre en logique, **caractérisé en ce que** le premier domaine (LAR) de gestion est constitué sous la forme d'un environnement de temps de marche d'application locale décentrée, qui a un APP-store (L_Store) local ou éloigné ayant au moins une application locale et le deuxième domaine (IAR) de gestion est réalisé sous la forme d'un autre environnement de temps de marche d'application locale décentrée, qui a un APP-store (I_Store) central ayant au moins une application archivée de manière centrale.

2. Système de communication suivant la revendication 1, **caractérisé en ce que** le serveur toile (30) a une chaîne (21) de programmes de commande uniform resource locator ayant plusieurs programmes de commande (URL1, URL2) uniform resource locator, dans lequel l'adaptateur proxy (20) est disposé dans le serveur toile (30) à la fin de la chaîne (21) de programmes de commande uniform resource locator.

3. Système de communication suivant la revendication 2, **caractérisé en ce que** les plusieurs programmes (URL1, URL2) de commande uniform resource locator de la chaîne (21) de programmes de commande uniform resource locator sont disposés en série l'un derrière l'autre dans le serveur toile (30), dans lequel chaque programme (URL1, URL2) de commande uniform resource locator de la chaîne (21) de programmes de commande uniform resource locator est agencé pour acheminer les demandes toile (W_Req) reçues au programme de commande uniform resource locator suivant dans la série, dans lequel le dernier programme de commande uniform resource locator dans la série est agencé pour transmettre la demande toile (W_Req) reçue acheminée à l'adaptateur proxy (20) et pour recevoir, de l'adaptateur proxy (20), la réponse toile (W_Resp) transformée.

4. Système de communication suivant l'une des revendications 1 à 3,
**caractérisé en ce que** l'adaptateur proxy (20) de transformation de la demande toile (W_Req) en la réponse toile (W_Resp) est agencé pour transformer la demande toile (W_Req) en une demande de réseau (N_Req) pour transmettre la demande de réseau (N_Req) à l'unité proxy (10), disposée de manière séparée en aval du serveur toile (30), pour recevoir une réponse de réseau (N_Resp) de l'unité proxy (10), montée de manière séparée en aval du serveur toile (30), en fonction du service toile (W_SER) et sur la base de la demande de réseau (N_Req) et pour transformer la réponse (N_Resp) de réseau reçue en la réponse toile (W_Resp).

5. Système de communication suivant l'une des revendications 1 à 4,
**caractérisé en ce que** le système (100) de communication a en outre une mémoire (50) de certificats pour mettre en mémoire des certificats numériques, dans lequel les certificats numériques mis en mémoire ont un premier certificat (CERT1) numérique pour le serveur toile (30) et un deuxième certificat (CERT2) numérique pour l'unité proxy (10), dans lequel la mémoire (50) de certificats est agencée pour mettre en mémoire le premier certificat (CERT1) numérique en fonction du serveur toile (30) et pour le mettre à disposition du serveur toile (30) et pour mettre en mémoire le deuxième certificat (CERT2) numérique en fonction de l'unité proxy (10) et le mettre à disposition de l'unité proxy (10).

6. Système de communication suivant la revendication 5, **caractérisé en ce que** le serveur toile (30) et l'unité proxy (10) sont agencés en fonction du premier certificat (CERT1) numérique et du deuxième certificat (CERT2) numérique, pour établir un canal (60) chiffré, entre l'adaptateur proxy (20) et l'unité proxy (10), pour la transmission sécurisée de la demande de réseau (N_Req) et de la réponse de réseau (N_Resp) entre l'adaptateur proxy (20) et l'unité proxy (10), dans lequel le canal (60) chiffré est sécurisé.

7. Appareil (40) d'automatisation industrielle pour le traitement d'une demande toile (W_Req) d'un client (C) pour appeler un service toile (W_SER) dans un réseau spécifique, comportant :
un serveur toile (30) de réception de la demande toile (W_Req) du client (C) et de retransmission au client (C) d'une réponse toile (W_Resp) transformée sur la base de la demande toile (W_Req),
une unité proxy (10), qui est disposée de manière séparée du serveur toile (30), qui est disposée en aval du serveur toile (30) dans l'appareil (40) d'automatisation industrielle et qui est couplée au service toile (W_SER).
dans lequel le serveur toile (30) a un adaptateur (20) proxy, qui est agencé pour coupler le serveur toile (30) à l'unité (10) proxy, disposée de manière séparée en aval de serveur toile (30),
dans lequel l'adaptateur proxy (20) est agencé en outre pour transformer en la réponse toile (W_Resp) la demande toile (W_Req) en fonction de l'unité proxy (10), montée de manière séparée et en aval du serveur toile (30), ainsi que du service toile (W_SER),
dans lequel le serveur toile est disposé dans un premier domaine de gestion (LAR) et l'unité proxy, montée de manière séparée et en aval du serveur toile, est disposée dans un deuxième domaine (IAR) de gestion, dans lequel le premier domaine (LAR) et de le deuxième domaine (IAR) de gestion sont séparés l'un de l'autre en logique, **caractérisé en ce que** le premier domaine (LAR) de gestion est constitué sous la forme d'un environnement de temps de marche d'application locale décentrée, qui a un APP-store (L_Store) local ou éloigné ayant au moins une application locale et le deuxième domaine (IAR) de gestion est réalisé sous la forme d'un autre environnement de temps de marche d'application locale décentrée, qui a un APP-store (I_Store) central ayant au moins une application archivée de manière centrale.

8. Appareil d'automatisation suivant la revendication 7, **caractérisé en ce que** l'environnement de temps de marche d'application locale décentrée est agencé pour effectuer, en fonction de la demande toile (W_Req) reçue, un tirage de l'application locale sur l'appareil (40) d'automatisation industrielle, dans lequel l'autre environnement de temps de marche d'application locale décentrée est agencé pour, en fonction d'une demande de réseau (N_Req) reçue en passant par l'unité proxy (10), charger le service toile (W_SER) et le mettre à disposition de l'unité proxy (10) pour la mise à disposition au client (C).

9. Appareil d'automatisation suivant l'une des revendications 7 ou 8,
**caractérisé en ce que** l'adaptateur proxy (20) de transformation de la demande toile (W_Req) en la réponse toile (W_Resp) est agencé pour transformer la demande toile (W_Req) en une demande de réseau (N_Req), pour transmettre la demande de réseau (N_Req) à l'unité proxy (10), disposée de manière séparée en aval du serveur toile (30), pour recevoir, en fonction du service toile (W_SER) et sur la base de la demande de réseau (N_Req) , une réponse de réseau (N_Resp) de l'unité proxy (10), disposée de manière séparée en aval du serveur toile (30), et pour transformer la réponse de réseau (N_Resp) reçue en la réponse toile (W_Resp).

10. Appareil d'automatisation suivant l'une des revendications 7 à 9,
**caractérisé en ce que** l'application locale et l'application archivée de manière centrale sont agencées pour effectuer, dans un système (100) de communication, des opérations de commande et de régulation en fonction de l'appareil (40) d'automatisation industrielle.

11. Appareil d'automatisation suivant l'une des revendications 7 à 10,
**caractérisé en ce que** l'application locale et l'application archivée de manière centrale sont agencées pour détecter, comprimer et/ou traiter des données de capteur du système (100) de communication.

12. Appareil d'automatisation suivant l'une des revendications 7 à 11,
**caractérisé en ce que** l'application locale et l'application archivée centrale sont agencées pour émettre des données de commande au moins de l'appareil (40) d'automatisation industrielle.

13. Appareil d'automatisation suivant l'une des revendications 7 à 12,
**caractérisé en ce que** l'appareil (40) d'automatisation industrielle est agencée pour, en fonction du service toile (W_SER), observer et/ou commander des processus et/ou des installations du système (100) de communication.

14. Appareil d'automatisation suivant l'une des revendications 7 à 13,
**caractérisé en ce que** le serveur toile (30) est agencé en outre pour, en fonction du service toile (W_SER) et en fonction de la au moins une application locale, observer et/ou commander d'autres processus et/ou d'autres installations du système (100) de communication.

15. Appareil d'automatisation suivant l'une des revendications 7 à 14,
**caractérisé en ce que** le serveur toile (30) est agencé en outre pour effectuer les processus de gestion dans le premier domaine (LAR) de gestion et/ou dans le deuxième domaine (IAR) de gestion.
